# EUROPEAN PATENT APPLICATION

(11) **EP 2 410 441 A1**
(43) Date of publication of application: **25.01.2012**
(21) Application number: 10193739.9
(22) Date of filing: 03.12.2010
(51) Int. Cl.: G06F 17/30

(54) **Registration of applications and unified media search**

(30) Priority: 16.07.2010 US 364929 P
(71) Applicant: RESEARCH IN MOTION LIMITED, Waterloo, Ontario N2L 3W8 (CA)
(72) Inventor: Edwards, Robert John, Waterloo Ontario N2L 3L3 (CA); Furniss, Chad Robert (Ford), Waterloo Ontario N2L 3L3 (CA); Kumar, Arun, Waterloo Ontario N2L 5Z5 (CA)
(74) Representative: Fennell, Gareth Charles

(57) **Abstract**

An application programming interface (API) includes an interface implemented by a software program or firmware program which enables an application to interact with other software or with firmware. An API can facilitates interaction between different software programs. Registration of an application can be the notification, by an API which corresponds to a non-native application, to native applications and to a core search framework of a mobile communications device. A core search framework provides a mechanism which enables an application to register as a provider of searchable data. A media application provides a search API media subset which enables non-native applications to register and enables non-native applications to indicate media type categories for which non-native applications may be searched. Registered non-native applications are launched based upon the type of media utilized by a media application.

## Description

### FIELD OF THE TECHNOLOGY

The present disclosure relates generally to mobile communications devices. More specifically, enabling implementations relate to platforms for an integrated media framework for a mobile communications device. The technology provides an integrated media experience for the discovery, acquisition, management and playback of various multimedia. The technology extends the functionality of device native media and integrates the functionality with non-native multimedia. In at least one implementation, the technology provides for the presentation of non-native applications directly from native media applications for installation and invocation. The technology can be customized dynamically on a per device or a per carrier basis or on a per device and a per carrier basis.

### BRIEF DESCRIPTION OF THE DRAWINGS

FIG. 1 illustrates a communication system including a mobile communications device to which example implementations of the technology can be applied.

FIG. 2 illustrates an indication of a search request on a display of a mobile communications device.

FIG. 3 illustrates an example mobile communications device.

FIG. 4 illustrates a block diagram of a mobile communications device.

FIG. 5 illustrates an indication of a search on a display of a mobile communications device.

FIG. 6 illustrates a portion of a search result on a display of a Mobile communications device.

FIG. 7 illustrates another portion of a search result on a display of a mobile communications device.

FIG. 8 illustrates another portion of a search result on a display of a mobile communications device.

FIG. 9 illustrates a search result on a display of a mobile communications device.

FIG. 10 illustrates another portion of the search result shown in FIG. 9.

FIG. 11 illustrates still another portion of the search result shown in FIG. 9.

FIG. 12 illustrates a different search result on a display of a mobile communications device.

FIG. 13 illustrates another different search result on a display of a mobile communications device.

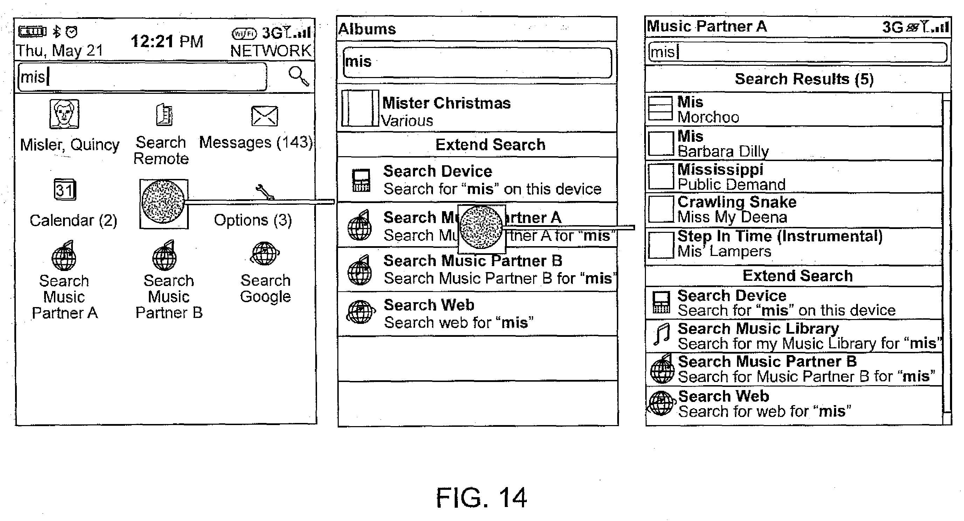

FIG. 14 illustrates a flow diagram of an extended search within the technology.

FIG. 15 illustrates a high level view of a unified search platform.

FIG. 16 illustrates a table of components and functionalities.

FIG. 17 illustrates a flow diagram of an alternative universal search to that shown in FIG. 14 within the technology.

FIG. 18 illustrates another flow diagram of a possible extended search within the technology.

FIG. 19 illustrates still another flow diagram of a possible extended search within the technology.

FIG. 20 illustrates the steps of a method within the technology.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

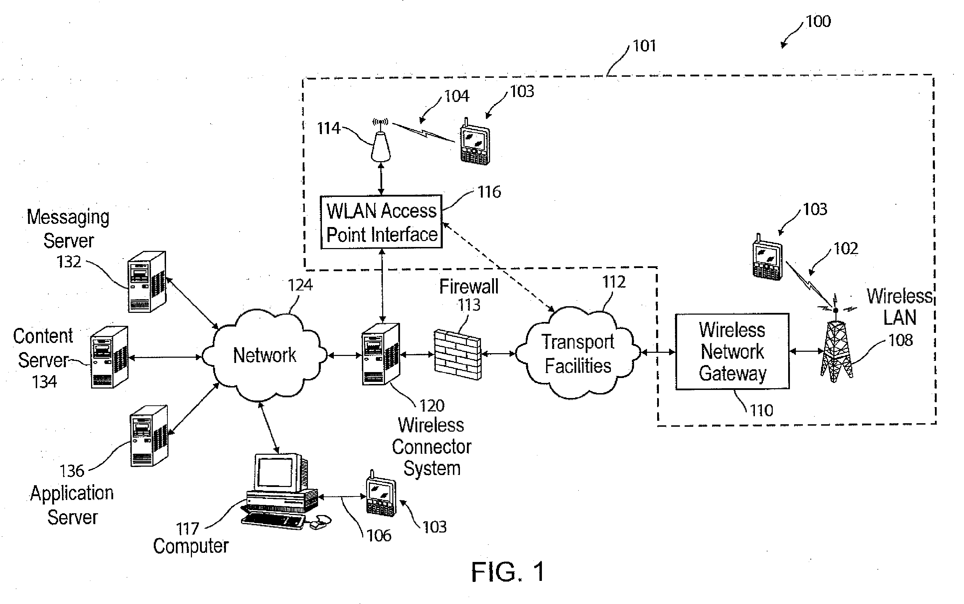

In order to facilitate an understanding of environments in which example implementations described herein can operate, reference is made to FIG. 1, which shows, in block diagram form, a communication system **100** in which implementations of the technology can be applied. The communication system **100** may comprise a number of mobile communications devices **103** that may be connected to the remainder of system **100** in any of several different ways. Accordingly, several instances of mobile communications devices **103** are depicted in FIG. 1 employing different example ways of connecting to system **100.**

These figures are exemplary only, and those persons skilled in the art will appreciate that additional elements and modifications may be necessary to make the communications device, e.g., **103** operable in particular network environments. While in the illustrated implementations, the communication devices, e.g., **103** may comprise smart phones, in other implementations, the communications devices may comprise personal digital assistants (PDA), tablet computers, laptop computers, desktop computers, servers, or other communications devices capable of sending and receiving electronic messages.

Mobile communications devices **103** are connected to a wireless network **101** that may comprise one or more of a Wireless Wide Area Network (WWAN) **102** and a Wireless Local Area Network (WLAN) **104** or other suitable network arrangements. In some implementations, the mobile communications devices **103** are configured to communicate over both the WWAN **102** and WLAN **104,** and to roam between these networks. In some implementations, the wireless network **101** may comprise multiple WWANs **102** and WLANs **104**.

The WWAN **102** may be implemented as any suitable wireless access network technology. By way of example, but not limitation, the WWAN **102** may be implemented as a wireless network that includes a number of transceiver base stations **108** where each of the base stations **108** providers wireless Radio Frequency (RF) coverage to a corresponding area or cell. The WWAN **102** is typically operated by a mobile network service provider that provides subscription packages to users of the mobile communications devices **103.** In some implementations, the WWAN **102** conforms ta one or more of the following wireless network types: Mobitex Radio Network, DataTAC, GSM (Global System for Mobile Communication), GPRS (General Packet Radio System), TDMA (Time Division Multiple Access), CDMA (Code-Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.15e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the mobile communications devices **103** to transport facilities **112,** and through the transport facilities **112** to a wireless connector system **120.** Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an interval enterprise network (e.g., an intranet), and its resources, or the wireless connector system **120** may be operated by a mobile network provider. In some implementations, the network **124** may be realized using the Internet rather than, or in addition to, an internal or enterprise network.

The tireless network gateway **110** provides an interface between the wireless connector system **120** and the WWAN **102,** which facilitates communication between the mobile communications devices **103** and other devices (not shown) connected, directly or indirectly, to the WWAN **102.** Accordingly, communications sent via the mobile communications devices **103** are transported via the WWAN **102** and the wireless network gateway **110** through transport facilities **112** to the wireless connector system **120.** Communications sent from the wireless connector system **120** are received by the wireless network gateway **110** and transported via the WWAN **102** to the mobile communications devices **103.**

The WLAN **104** comprises a wireless network that, in some implementations, conforms to IEEE 802.11x standards (sometimes referred to as Wi-Fi TM) such as, for example, the IEEE 802.11a, 802.11b and/or 802.11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120,** such as a virtual private network (VPN), may be used). The AP interface **116** provides translation and routing services between the access points **114** and the wireless connector system **120** to facilitate communication, directly or indirectly, with the wireless connector system **120.**

The wireless connector system **120** may be implemented as one or more servers, and is typically located behind a firewall **113.** The wireless connector system **120** manages communications, including email, Hypertext Transfer Protocol (HTTP), and HTTP Secure (HTTPS) communications to and from a set of managed mobile communications devices **103.** The wireless connector system **120** also provides administrative control and management capabilities over users and mobile communications devices **103** that might connect to the wireless connector system **120.**

The wireless connector system **120** allows the mobile communications devices **103** to access the network **124** and connected resources and services such as a messaging server **132** (for example, a Microsoft Exchange Server®, IBM Lotus Domino®, or Novell GroupWise^{™} email server), a content server **134** for providing content such as Internet content or content from an organization's internal servers, application servers **136** for implementing server-based applications such as instant messaging (IM) applications to mobile communications devices **103,** and intranet file services.

The wireless connector system **120** typically provides a secure exchange of data (e.g., email messages, personal information manager (PIM) data, and IM data) with the mobile communications devices **103.** In some implementations, communications between the wireless connector system **120** and the mobile communications devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the mobile communications device **103,** and can typically be regenerated by the user on mobile communications devices **103.** Data sent to the mobile communications devices **103** is encrypted by the wireless connector system **120** using the private encryption key retrieved from the user's mailbox. The encrypted data, when received on the mobile communications devices **103,** is decrypted using the private encryption key stored in memory. Similarly, data sent to the wireless connector system **120** from the mobile communications devices **103** is encrypted using the private encryption key stored in the memory of the mobile communications device **103.** The encrypted data, when received on the wireless connector system **120,** is decrypted using the private encryption key retrieved from the user's mailbox.

The wireless network gateway **110** is adapted to send data packets received from the mobile communications device **103** over the WWAN **102** to the wireless connector system **120.** The wireless connector system **120** then sends the data packets to the appropriate connection point such as the messaging server **132** or content servers **134** or application server **136c** Conversely, the wireless connector system **120** sends data packets received, for example, from the messaging server **132** or content servers **134** or application servers **136** to the wireless network gateway **110** that then transmit the data packets to the destination mobile communications device **103.** The AP interfaces **116** of the WLAN **104** provide similar sending functions between the mobile communications device 103 the wireless connector system **120** and network connection point such as the messaging server **132,** content server **134** and application server **136.**

The network **124** may comprise a private local area network, metropolitan area network, wide area network, the public Internet or combinations thereof and may include virtual networks constructed using any of these, alone, or in combination. A mobile communications device **103** may alternatively connect to the wireless connector system **120** using a computer **117,** such as desktop or notebook computer, via the network **124.** A link **106** may be provided for exchanging information between the mobile communications device **103** and a computer **117** connected to the wireless connector system **120.** The link **106** may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile communications device **103** and computer **117.** The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15, or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communications devices **103.** Suitable variations of the communication system will be understood to a person of skill in the art and are intended to fall within the scope of the present disclosure.

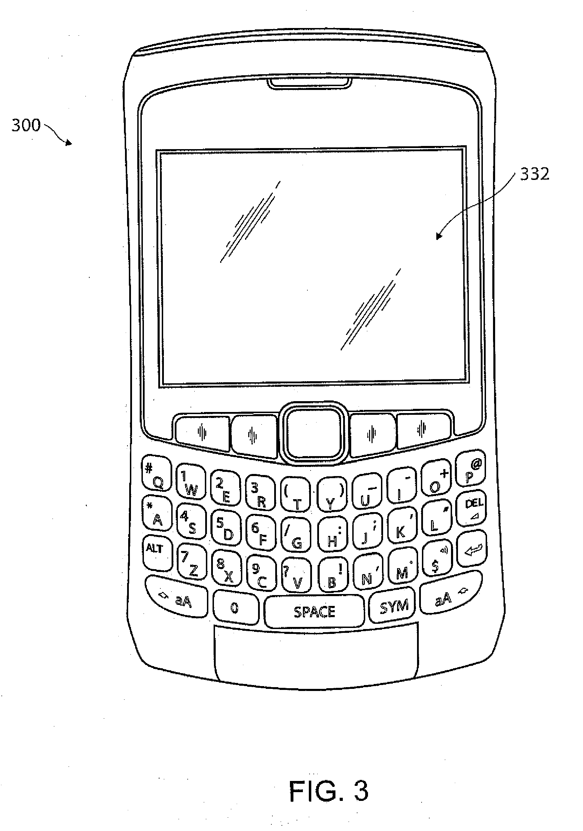

As will be appreciated from FIG. 3, an exemplary mobile communications device **300** (as an example of **103)** comprises a display **322** located above a keyboard **332** constituting a user input means that is suitable for accommodating textual input to the device **300.** In some implementations, the keyboard **332** can be part of a touch screen display **322.** The front face **370** of the device **300** has a navigation row **380.** As shown, the device **300** is of uni-body construction, also known as a "candy-bar" design.

The device **300** may include an auxiliary input that acts as a cursor navigation tool **327** and that may be also exteriorly located upon the front face **370** of the device **300.** The front face location of a cursor navigation tool **327** allows the tool to be thumb-actuable, e.g., like the keys of the keyboard **332.** Some implementations of the technology provide the navigation tool **327** in the form of a trackball **321** that may be utilized to instruct two-dimentional screen cursor movement in substantially any direction, as well as act as an actuator when the trackball **321** is depressed like a button. Other implementations can provide the navigation tool in the form of a trackpad, a touchpad, a pointing stick, joystick, graphics tablet, or combinations thereof. The placement of the navigation tool **327** can be above the keyboard **332** and below the display **322;** here, it may avoid interference during keyboarding and does not block the operator's view of the display **322** during use.

The device **300** may be configured to send and receive messages. The device **300** includes a body **371** that can, in some implementations, be configured to be held in one hand by an operator of the device **300** during text entry. A display **322** is included that is located on a front face **370** of the body **371** and upon which information is displayed to the operator, e.g., during text entry. The device **300** may also be configured to send and receive voice communications such as mobile telephone calls, The device **300** also can include a camera (not shown) to allow the device **300** to take electronic photographs that can be referred to as photos or pictures. Further, the device **300** can be configured to operate a web browser.

The device **300** may further contain a sensor, e.g., proximity sensor, behind a cover mounted in an aperture defined in body **371.** In devices where substantially all the front face **370** of the device is a touch screen, a portion of the touch screen can constitute the cover.

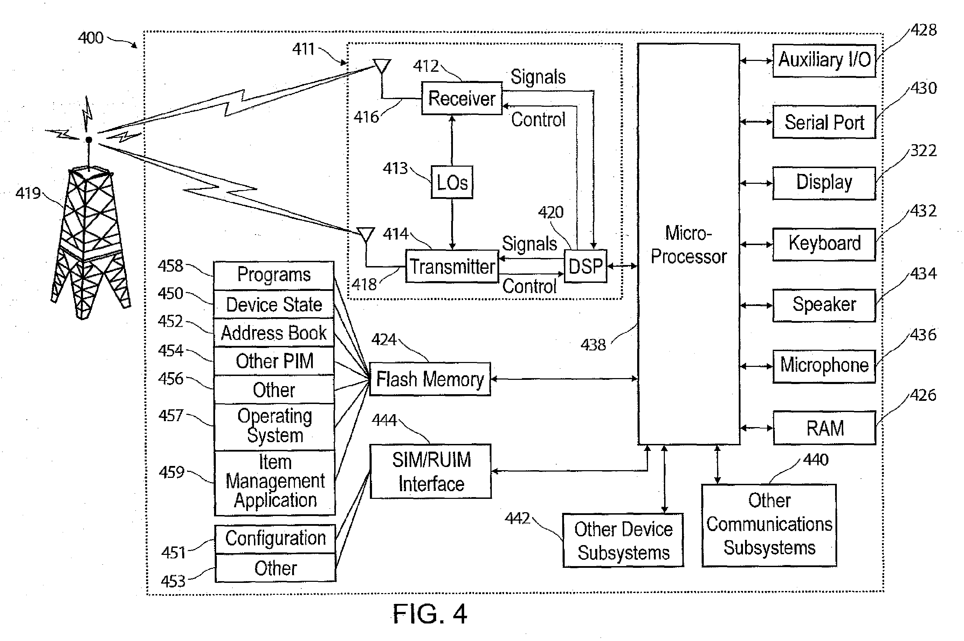

Referring to FIG. 4, a block diagram of a communications device, such as **300** and **103,** in accordance with an exemplary implementation is illustrated. As shown, the device **300** includes a processor **438** that controls the operation of the communications device **300.** A communication subsystem **411** performs communication transmission and reception with the wireless network **419.** The microprocessor **438** further can be communicatively coupled with an auxiliary input/output (I/O) subsystem **428.** In at-least one implementation, the processor **438** can be communicatively coupled to a serial port (for example, a Universal Serial Bus port) **430** that can allow for communication with other devices or systems via the serial port **430.** A display **322** can be communicatively coupled to processor **438** to allow for display of information to an operator of the communications device **300.** When the communications device **300** is equipped with a keyboard **432** (e.g., **332),** the keyboard can also be communicatively coupled with the processor **438.** The communications device **300** can include a speaker **434,** a microphone **436,** random access memory (RAM) **426,** and flash memory **424,** all of which may be communicatively coupled to the processor **438.** Other similar components may be provided on the communications device **300** as well and optionally communicatively coupled to the processor **438.** Other communication subsystems **440** and other device subsystems **442** are generally indicated as being functionally connected with the processor **438** as well. An example of a communication subsystem **440** is a short range communication system such as BLUETOOTH® communication module or a WI-FI® communication module (a communication module in compliance with IEEE 802.11b) and associated circuits and components. Examples of other device subsystem **442** include a sensor and implementations, of the present technology.

Additionally, the processor **438** is able to perform operating system functions and enables execution of programs on the communications device **300.** In some implementations not all of the above components are included in the communications device **300.** For example, in at least one implementation, the keyboard **432** is not provided as a separate component and is instead integrated with a touch screen as described below.

The auxiliary I/O subsystem **428** can take the form of a variety of different navigation tools (multi-directional or single-directional) such as a trackball navigation tool **321,** as illustrated in the exemplary implementation shown in FIG. 3, or a thumbwheel, a navigation pad, a joystick, touch-sensitive interface, or other I/O interface. These navigation tools may be located on the front surface of the communications device **300** or may be located on any exterior surface of the communications device **300.** Other auxiliary I/O subsystems may include external display devices and externally connected keyboards (not shown). While the above examples have been provided in relation to the auxiliary I/O subsystem **428,** other subsystems capable of providing input or receiving output from the communications device **300** are considered within the scope of this disclosure. Additionally, other keys may be placed along the side of the communications device **300** to function as escape keys, volume control keys, scrolling keys, power switches, or user programmable keys, and may likewise be programmed accordingly.

The keyboard **432** can include a plurality of keys that can be of a physical nature such as actuable buttons, or the actuable buttons can be of a software nature, typically constituted by representations of physical keys on a display **322** (referred to herein as "virtual keys"). It is also contemplated that the user input can be provided as a combination of the two types of keys. Each key of the plurality of keys is associated with at least one action which can be the input of a character, a command or a function, In this context, "characters" are contemplated to exemplarily include alphabetic letters, language symbols, numbers, punctuation, insignias, icons, pictures, and even a blank space.

In the case of virtual keys, the indicia for the respective keys are shown on the display **322,** which in one implementation is enabled by touching the display **322,** for example, with a stylus, finger, finger tip, finger nail, or other pointer, to generate the character or activate the indicated command or function. Some examples of displays **322** capable of detecting a touch include resistive, capacitive, projected capacitive, infrared and surface acoustic wave (SAW) touch screens.

Physical and virtual keys can be combined in many different ways as appreciated by those skilled in the art. In one implementation, physical and virtual keys are combined such that the plurality of enabled keys for a particular program or feature of the communications device **300** is shown on the displays **322** in the same configuration as the physical keys. Using this configuration, the operator can select the appropriate physical key corresponding to what is shown on the display **322.** Thus, the desired character, command or function is obtained by depressing the physical key corresponding to the character, command or function displayed at a corresponding position on the display 322, rather than touching the display 322.

Furthermore, the communications device **300** is equipped with components to enable operation of various programs, as shown in FIG. 4. In an exemplary implementation, the flash memory **424** is enabled to provide a storage location for the operating system **457, device** programs **458,** and data. The operating system **457** is generally configured to manage other programs **458** that are also stored in memory **424** and executable on the processor **438.** The operating system **457** honors requests for services made by programs **458** through predefined program interfaces. More specifically, the operating system **457** typically determines the order in which multiple programs **458** are executed on the processor **438** and the execution time allotted for each program **458,** manages the sharing of memory **424** among multiple programs **458,** handles input and output to and from other device subsystems **442,** and so on. In addition, operators typically can interact directly with the operating system **457** through a user interface usually including the keyboard **432** and display **322.** While in an exemplary implementation the operating system **457** is stored in flash memory **424,** the operating system **457** in other implementations is stored in read-only memory (ROM) or similar storage element (not shown). As those skilled in the art will appreciate, the operating system **457,** device program **458_{,}** or parts thereof, may be loaded in RAM **426** or other volatile memory.

In some implementations, the flash memory **424** may contain programs **458** for execution on the device **300,** including - but not limited to an address book **452,** a personal information manager (PIM) **454,** and a device state **450.** Furthermore, programs **458,** such as social software, and other information **456** including data can be segregated upon storage in the flash memory **424** of the device **300.**

When the communications device **300** is enabled for two-way communication within the wireless communication network **419,** it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-T9), Ultra Mobile Broadband (UMB) networks, Worldwide Interoperability for Microwave Access (WiMAX), and other networks that can be used for data and voice, or just data of voice. For the systems listed above, the communications device **300** may use a unique identifier to enable the communications device **300** to transmit and receive signals from the communication network **419.** Other systems may not use such identifying information. GPRS, UMTS, and EDGE use a Subscriber Identity Module (SIM) in order to allow communication with the communication network **419.** Likewise, most CDMA systems use a Removable User Identity Module (RUIM) in order to communicate with the CDMA network. The RUIM and SIM card can be used in multiple different communications devices **300.** A communications device **300** can be configured to operate some features without a SIM/RUIM card, but a communications device will not necessarily be able to communicate with the network **419.** A SIM/RUIM interface **444** located within the communications device **300** allows for removal or insertion of a SIM/RUIM card (not shown). The SIM/RUIM card features memory and holds key configurations **451,** and other information **453** such as identification and subscriber related information. With a properly enabled communications device **300,** two-way communication between the communications device **300** and communication network **419** is possible.

If the communications device **300** is enabled as described above or the communication network **419** does not use such enablement, the two-way communication enabled communications device **300** is able to both transmit and receive information from the communication network **419.** The transfer of communication can be from the communications device **300** or to the communications device **300.** In order to communicate with the communication network **419,** the device **300** can be equipped with an integral or internal antenna **418** for transmitting signals to the communication network **419.** Likewise the device **300** can be equipped with another antenna **416** for receiving communication from the communication network **419.** These antennae **(416, 418)** in another exemplary implementation are combined into a single antenna (not shown). As one skilled in the art would appreciate, the antenna or antennae **(416, 418)** in another implementation can be externally mounted on the communications device **300.**

When equipped for two-way communication, the communications device 300 features a communication subsystem **411.** As is understood in the art, a communication subsystem **411** is modified so that a communication subsystem can support the operational needs of a communications device **300.** The subsystem **411** includes a transmitter **414** and receiver **412** including the associated antenna or antennae **(416, 418**) as described above, local oscillators (LOs) **413,** and a processing module that in the presently described exemplary implementation is a digital signals processor (DSP) **420.**

It is contemplated that communication by the communications device **300** with the wireless network **419** can be any type of communication that both the wireless network **419** and communications device **300** are enabled to transmit, receive and process. In general, these can be classified as voice or data, or both voice and data. Voice communication generally refers to communication in which signals for audible sounds are transmitted by the communications device **300** through the communication network **419.** Data generally refers to all other types of communication that the communications device **300** is capable of performing within the constraints of the wireless network **419.**

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communications device **300** is enhanced when connectable within a communication system, and when connectable on a wireless basis in a network **419** in which voice, text messaging, and other data transfer are accommodated. Device **300** can include programs such as a web browser, a file browser, and client programs for interacting with server programs. Devices, e.g., **103, 300,** for use in the technology can be characterized by an identification number assigned to the device. Such identification numbers cannot be changed and are locked to each device.

implementations of the technology can be realized as including programming on a mobile communications device, e.g., **103.** In some implementations, programming for the technology is on the mobile communication device **103,** while data used by the mobile communications device **103 is** on the wireless connector system **120** or a network server such as content server **134,** messaging server **132,** or application server **136.** In some implementations, programming for the technology can be realized on a remote server. Allocation of functionality among architectural elements can be a function of several factors including latency, processing resource availability and efficient usage, storage availability and efficient usage, and revenue opportunities.

As noted herein with respect to FIG. 3, device **300** can contain a proximity sensor. A typical proximity sensor can detect the presence of an object proximate to the sensor without physical contact between the object and the sensor. Typical active proximity sensors emit an electromagnetic or electrostatic field, or a beam of electromagnetic radiation, and can detect changes in the field or in a return signal. The object being sensed is typically referred to as the proximity sensor's "target."

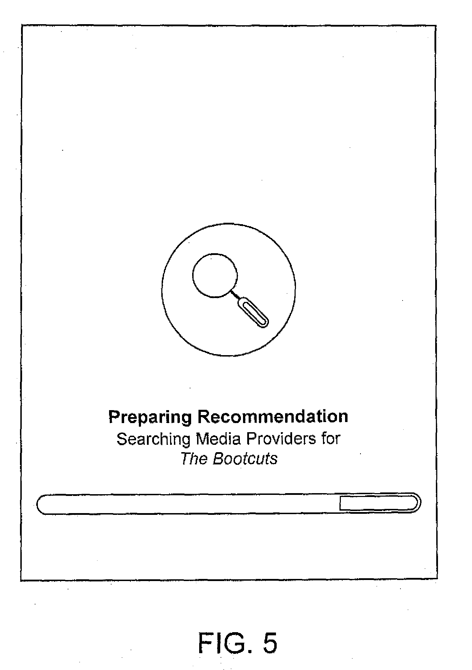

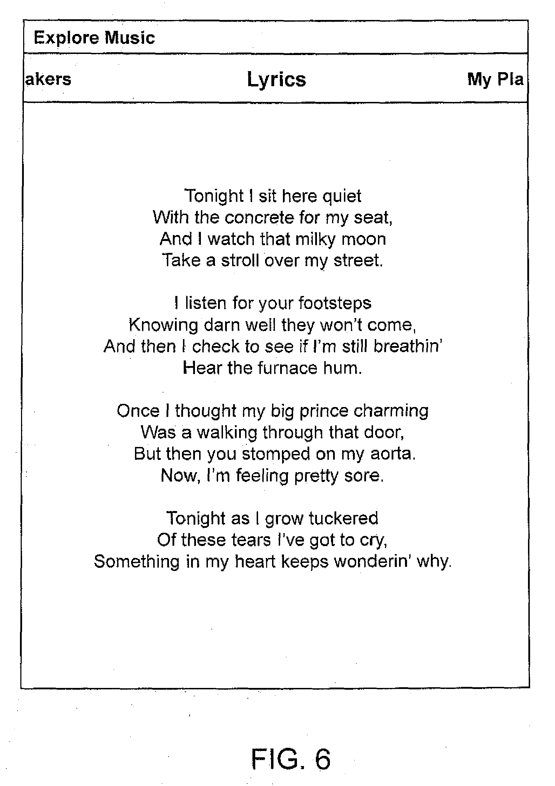

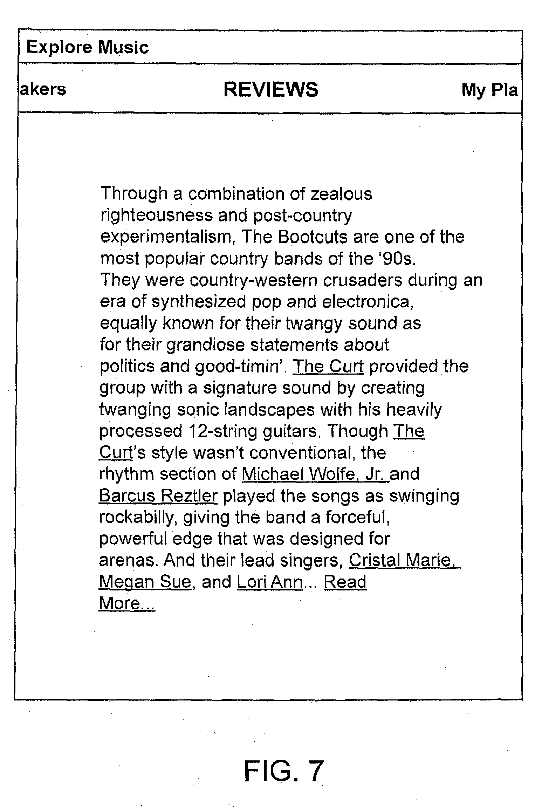

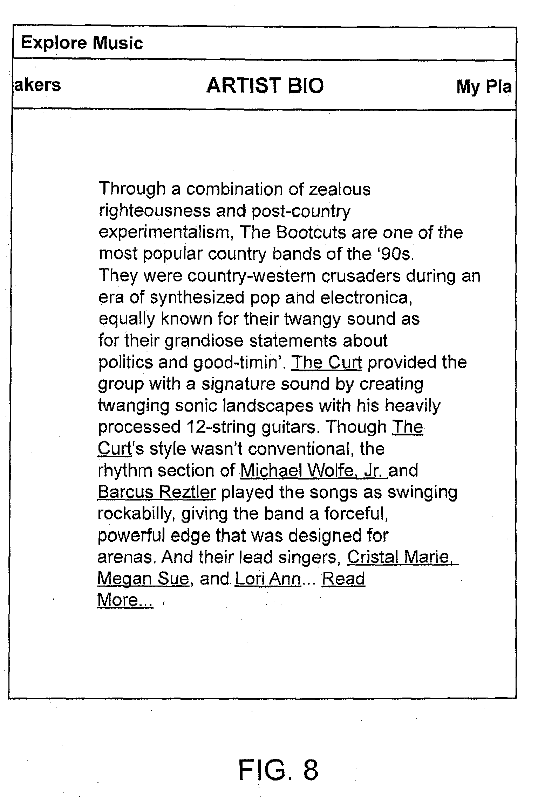

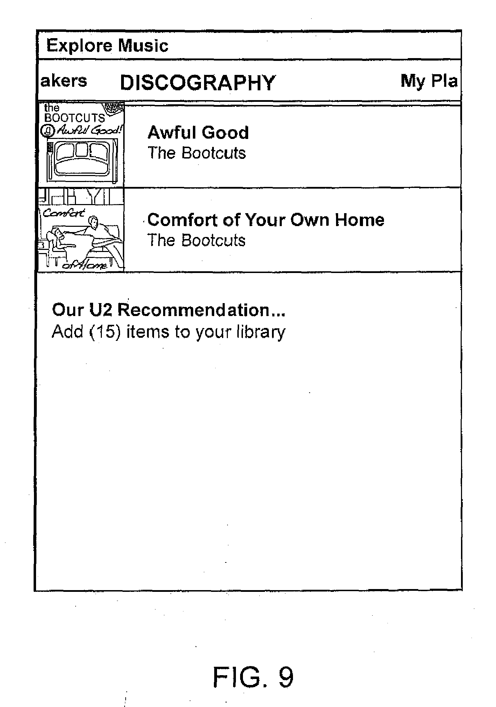

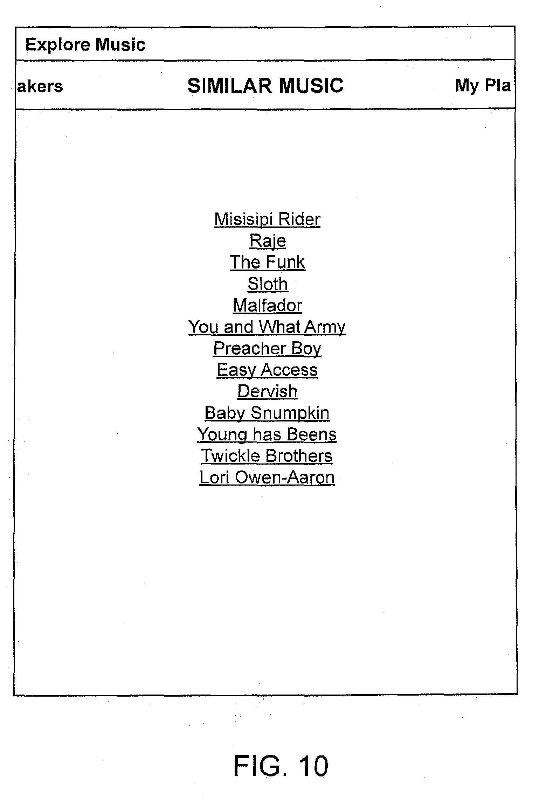

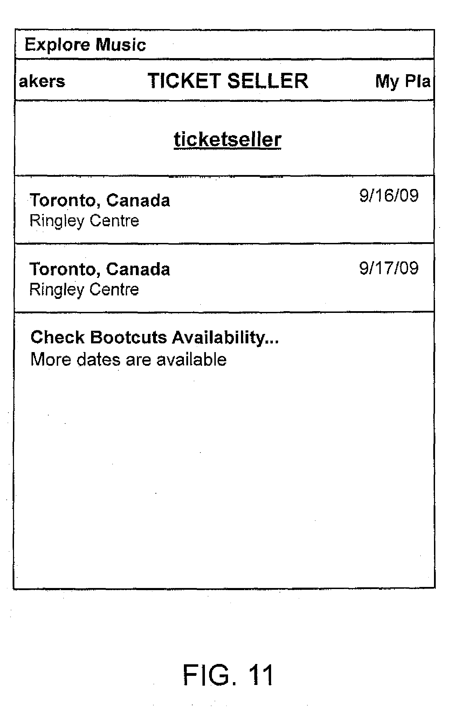

In at least one implementation of the technology, users can link to native media applications from a Home Screen, as shown in FIG. 3, which can be a global search application, to present various search results, as shown in FIGS. 5-12. Search results presented within native media applications can be extended to other media Services which may be integrated into a framework. From within native media applications (including, but not limited to a media player) users can search for highlighted media or media within partner media services which may be integrated into a framework.

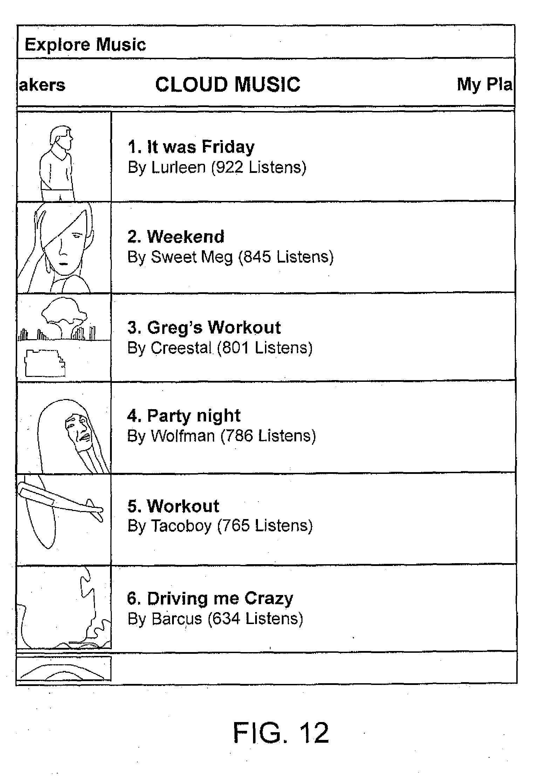

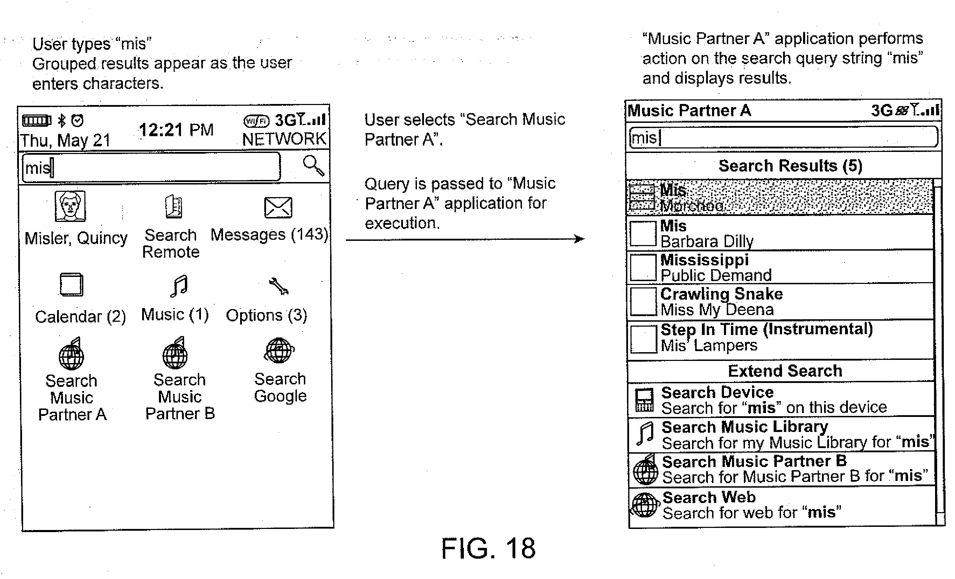

By way of a non-limiting example, the technology can be used to search for and capture photos, search for and view photos, search for and play music, search for and capture videos, and to search for and view videos, as depicted in FIG. 12. The technology integrates providers of music and video content. Integrated content providers are accessed and the user of a mobile communications device is presented listings of related multimedia content based upon the metadata associated with multimedia content which can be provided by integrated content provider, as depicted in FIG. 18.

Within the technology, a mobile communications device **300** can be configured to comprise a core search framework. A core search framework can comprise a number of APIs providing search capabilities to different applications on a device **300.** A media application on the device **300** can provide a search API subset to media which allows non-native applications to register with a core search framework and provide the media type category for which a non-native application is discoverable. Once registered a non-native application can be launched based on the media type of the current media application.

The technology can track, collect and aggregate data in the form of a multimedia profit (MMP). The technology can make a multimedia profile available for other resources which can be provided on a mobile communications device **300.** Non-limiting examples of information that can be contained within a MMP are music information: favorite genres, artists, albums and songs; playlists and songs contained in a playlist; recently added or recently downloaded or recently purchased music; and music services to which a user of the mobile communications device **300** subscribes, video information: favorite videos; recently added, recently downloaded, recently purchased videos; links to video sharing sites; video services and associated information, podcast information: favorite channels and specific episodes and podcasts to which a user has recently subscribed, recently downloaded or recently purchased, and picture information: favorite pictures; recently captured pictures, recently added pictures, recently downloaded pictures and links to photo sharing sites.

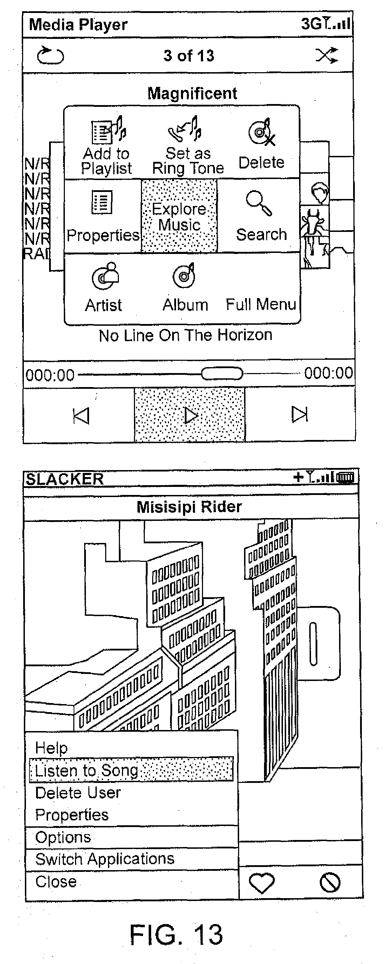

In one implementation of the technology, as shown in FIG. 13, from within native music and video applications, an "Add to Favorites" option can be presented on the display **322.** Selection of the option adds the associated metadata or link or metadata and link to a Media Profile database contained in a mobile communications device **300.** A list of favorites can be accessed and updated by other application or by manual selection by a user of the mobile communications device **300.**

The technology can present personalized data or content recommendations from applications other than an application which is currently running based on a device **300** user's MMP. The technology can be configured to present recommendations to a user of a mobile communications device **300** when he or she is exploring specific media. The technology creates a dynamic application launch point that is accessible from media that is displayed on a mobile communications device **300** at any given moment. The technology can also aggregate, collate and send personal and contextual information to other applications. As an example of personal information, the technology can send a list of favorite artists from one application to other applications. As an example of contextual information, the technology can send information about the composer of a piece of music being played by an application to other applications. The technology enables a mobile communications device **300** to present personalized recommendations of content from media services and applications based on an MMP of the user of a mobile communications device **300.**

In at least one implementation of the technology, from within music and video applications native to a mobile communications device **300,** an explore option is displayed on the display 322 of the mobile communications device **300.** Selection of the explore option displays contextual information relating to music or a video being played by a native application. The contextual information can come from other native applications or the contextual information can come from non-native applications. Non-native applications can include integrated carrier applications and registered multimedia services. The integrated carrier applications and registered multimedia services can vary by region or carrier or vary by region and carrier. A mobile communications device **300** can be programmed to contain a set of API's and connectivity options for allowing and enabling media services to connect to the framework to present information on a mobile communications device **300.**

In at least one implementation of the technology, in order to purchase or play content from a registered non-native application, download and installation of an application can be required.

In at least one implementation of the technology, a mobile communications device **300** displays static or dynamic or both static and dynamic information based on the parameters of a search, based on the music or video content, or based on both the music and video content, present on a mobile communications device **300.** A mobile communications device **300 can** be configured to be integrated with content providers and present content when the user of a device **300** selects an explore option.

In at least one implementation of the technology, a mobile communications device **300** can be configured to enable a user to view the specific MMP of a particular contact listed in a contacts application stored on a mobile communications device **300.** A mobile communications device **300** can be prompted by a user to explore specific items contained within a contact's profile and display similar content from registered applications.

An application programming interface (API) can include an interface implemented by a software program or firmware program which enables a software program or a firmware program to interact with other software or with firmware. An API can facilitate interaction between different software programs. An API can be implemented by applications, libraries, and operating systems to determine the vocabularies of applications, libraries and operating systems and calling conventions of applications, libraries and operating systems in order to access the services of applications, libraries and operating systems. An API can include specifications for routines, data structures, object classes, and protocols used to communicate between the user of a mobile communications device **300** and the implementer of an API.

Registration of an application can be the notification, by an API which corresponds to a non-native application, to native applications and to a core search framework of a mobile communications device **300,** what media type categories for which the non-native application are discoverable and that a non-native application has implemented the search APIs preprogrammed into a mobile communications device **300.** Thus, a core search framework provides a mechanism which enables applications to register as a provider of searchable data. At least three modes of framework to application interaction can be programmed into a mobile communications device **300** and can be specified upon registration, as will be described in greater detail below.

The technology includes a core search framework which can include a number of APIs which can collectively provide search capabilities to different applications on a device **300.** A media application can provide a search API media subset which enables non-native applications to register non-native applications and enables non-native applications to indicate media type categories for which non-native applications may be searched. Once registered, non-native applications can be launched based upon the type of media being utilized by a media application.

In one example of the technology, a non-native application can register as a data provider, subsequently providing data to be indexed within a core search framework (or simply framework) which enables an application to be displayed and utilized based on a category of search. The preceding example can be particularly beneficial if the data corresponding to an application is stored on a device **300** and if an application has no inherent search capability.

In a second example, an application can register as a "click to search" application. In the "click to search" mode, search requests invoked against the application can be passed through to an application for processing. The registration of an application as a "click to search" application can be advantageous where an application interacts with data which is not stored on a particular device **300,** for example the data might be web based, and search queries are collated and forwarded to a server for implementation.

In a third example, a non-native application can register with the core search framework as a target for extended search operations. In this third example, a mobile communications device **300** displays an application as a selection option to explore for subsequent searches when the mobile communications device **300** displays the results of a search. If an application is registered as an "extend-search" data source for media data, when a mobile communications device **300** displays results for a media search an application can also be stored on a device **300** and can be invoked by a current search query string such that an application can act on a current search query accordingly. Thus, it will be appreciated that the framework can provide a mechanism which enables applications to inform the framework of the data or type of data that an application deems search worthy.

In an example of the technology, the framework can enable an application to be called to identify which data sources are relevant to a search query. Data sources may reside on a device **300** or may reside elsewhere, for example, on a server. A calling application can specify a data source by indicating search criteria. Search criteria can include data location, such as whether data resides on a device **300** or whether data resides elsewhere. Search criteria can also include data source types, such as email, media, contacts, and the like. Media types can include, but are not limited to, photographic data, sound data (music, for example), video data, and the like.

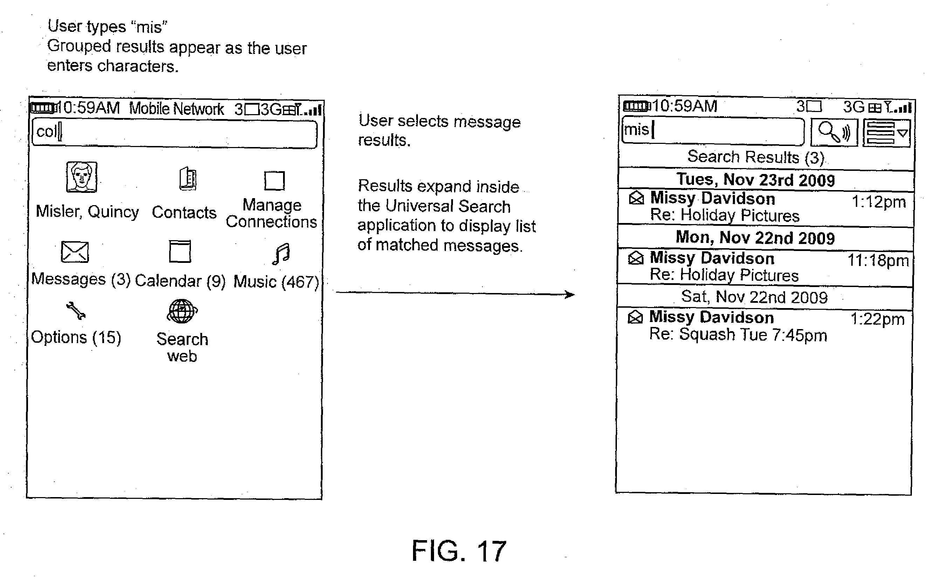

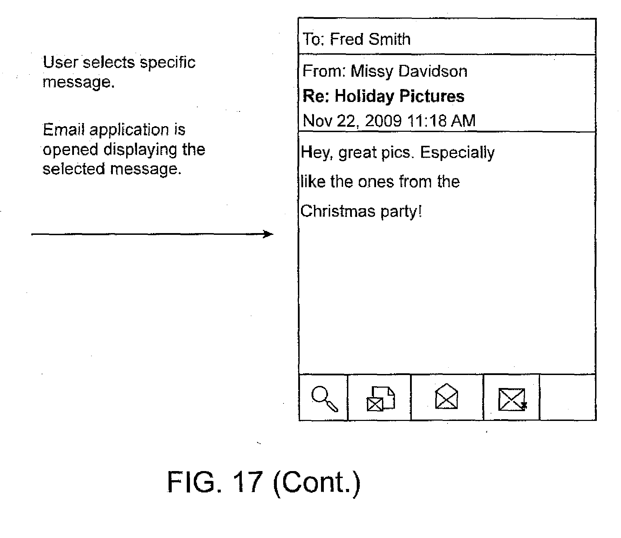

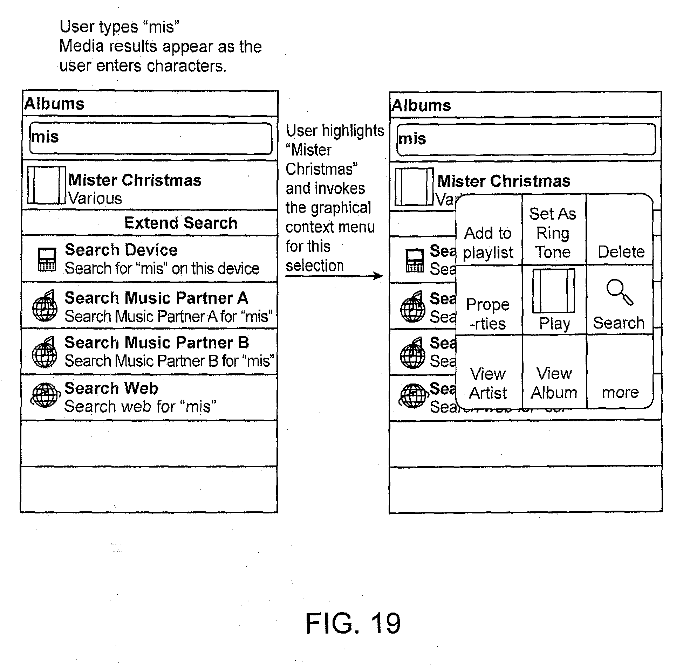

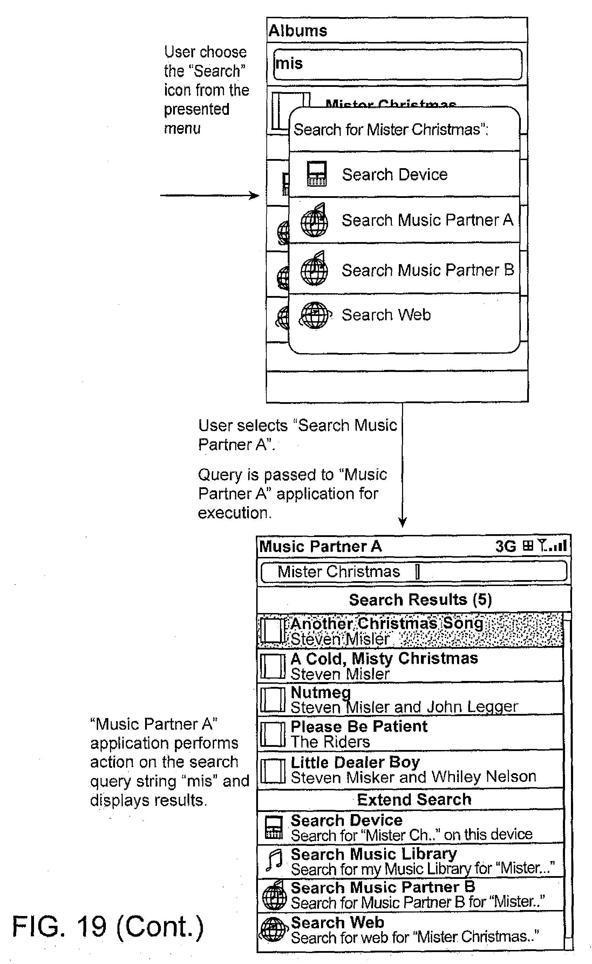

FIGS. 17-19 illustrate a possible work flow scenarios as invoked from a universal search application which utilizes an underlying unified search API within the technology. As shown in FIGS. 17-18, as a user enters text in a search box of a universal search application, the framework can retrieve search results dynamically from various data sources, which can then be displayed by a universal search application within a mobile communications device **300.** As illustrated in FIG. 19, a user of a mobile communications device **300** can expand a category of search results in order to view a detailed list of matches for any category. If a user of a device **300** desires, he or she can invoke an action associated with a search result. Referring again to FIG. 17., if, for example, a search result includes an email, actions which can be invoked can include viewing an email, replying to an email, forwarding an email, and deleting an email.

FIG. 19 illustrates a possible work flow scenario for non-native applications as invoked by a universal search application utilizing an underlying unified search API. In the example illustrated in FIGS. 17-18, as a user enters text in the search box of a universal search application, the framework retrieves search results dynamically from various data sources, which can be displayed within a non-native search application. As shown in FIG. 19, an extended set of secondary search options can be provided as part of search results. Secondary search options can include, but are not limited to, the searching of a designated content provider and the searching of the World Wide Web or internet.

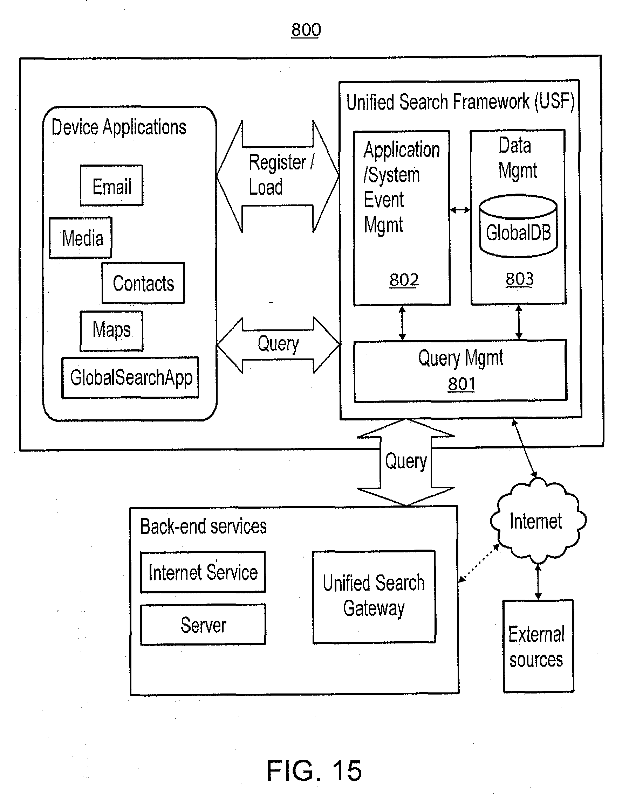

FIG. 15 illustrates a high level view of a unified search platform. As depicted in FIG. 15, a query management component **801,** also known as a query manager **801,** manages search queries and provides APIs to search data that are available either on a mobile communications device **300** or are available from outside a device **300,** or both on a device **300** and outside a device **300.** FIG. 15 also depicts an application and system event management component **802,** also known as a system manager **802.** A system event management component **802** is responsible for registration of non-native applications **806**, and is responsible for management and handling of other system level events. FIG. 15 also illustrates a data management component **803,** also known as a data manager **803.** A data management component **803** is responsible for loading data into a framework's data storage and maintaining the loaded data. Maintaining loaded data can include, but is not limited to aging loaded data, indexing loaded data, caching loaded data, and the like.

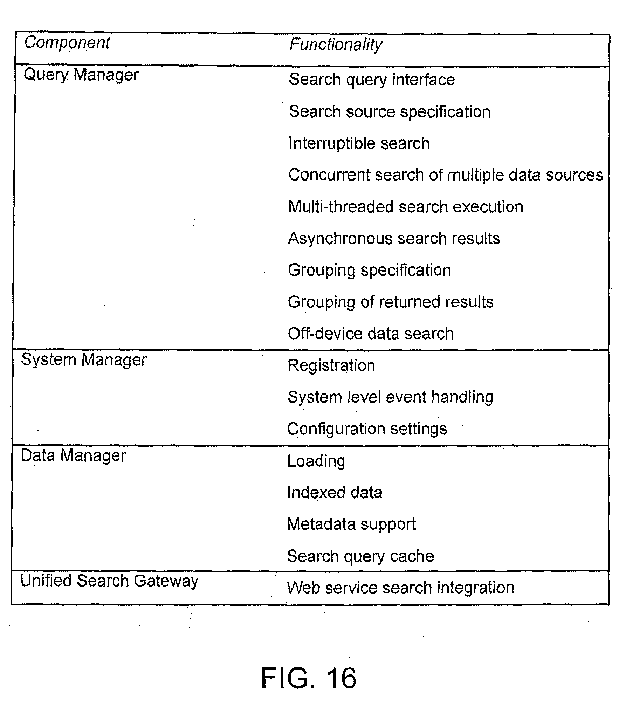

Some of the functionalities provided by the components discussed with reference to FIG. 15 are shown in chart form in FIG. 16. The chart in FIG. 16 matches components of a framework with functionality that a component may provide.

There are at least three types of search integration functionality which can be specified when a non-native application is registered with a unified search framework. Two types are generally related to whether or not there is a corresponding native application present on a mobile communications device **300** which is responsible for a data source and, whether or not data is present on a mobile communications device **300** or data is remotely located and accessed via the internet. In situations where data is resident on a device **300** and there is an application capable of utilizing data resident on a device **300,** an application can utilize public APIs of the framework in order to register with the framework and make its data searchable. In situations where data is not resident on a device **300,** it is possible for an application to register with the framework as a *click-to-search* data source and therefore act as a virtual on-device data source. Thus the framework passes action requests, and the like, directly to an application, and an application interacts with a remote data provider.

In at least one implementation of the technology, an application can register to identify itself as a supplemental source of data for specific data types. An application which is registered and identified as a supplemental source of data for specific data types can be referred to as an *extend-search* data source. An *extend-search* data source can be referenced within subsequent search results affected against a particular data type.

In at least one implementation of the technology, a unified search framework enables searches of data which is not stored on a mobile communications device **300,** but may be for example present in web services, via a gateway server. A gateway server **805** can act as a single point of access for web service searches. The fact that a gateway server **805** can act as a single point of access for web service searches can be advantageous because multiple services can be queried via a single over-the-air connection. A gateway server **805** can also be advantageous because a common query request protocol between a device **300** and a gateway server **805** can be utilized, thus hiding API specifics for different web services. Moreover, additional services can be implemented on a server, which can obviate the need for reconfiguration of a mobile communications device **300.** Additionally, a gateway server **805** can be beneficial because a gateway server **805** can enable search requests to be marshaled to multiple sources based on a single search request, thus reducing over-the-air bandwidth utilization.

A mobile communications device **300** can be configured to display a data entry point to receive search criteria applicable to multiple data sources, such that the data entry point is consistently available to all relevant applications on a device **300** and search results are displayed in a unified format. A core search framework of a device **300** can execute search queries across multiple sources of data on the device **300.** A core search framework can require a multi-threaded implementation to support concurrent searches across multiple data sources.

In one aspect of the technology, an application **806** can implement search APIs which are pre-programmed into a mobile communications device **300.** Search APIs enable an application **806** to indicate types of media an application can read. Thus when a particular item of media content is selected, an application **806** is displayed as an extended search option, as illustrated in FIG. 17. Applications **806** can be specific media types or combinations of media types. Media types include can include music, video, pictures, podcasts, Ring Tones^{™}, Voice Notes-rm and the like.

In one implementation of the technology, when an application is installed on the device **300,** an application notifies the core search framework that the application has implemented the APIs present on the device **300** and of what media types the application can read, process and play.

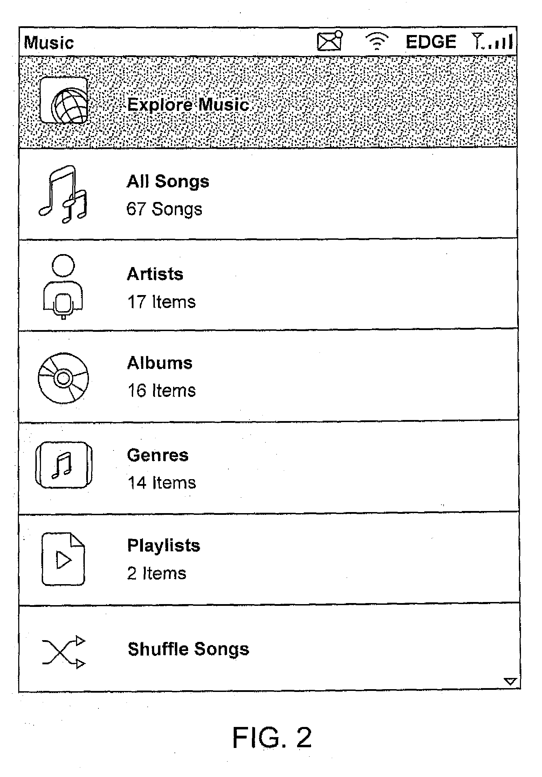

In one aspect of the technology, search parameters for a given context can be prepared by a unified search framework and passed to a single extended search item when invoked. The technology employs a media based extended context search, an example of which is illustrated in FIG. 19. A media based extended context search can occur when a media item is displayed and a search option is selected from within a graphical context menu. The selection of a search option, examples of which are shown in FIGS. 2 and 19, causes the display of a list of registered extended search providers to which context keywords are passed.

Within the technology, searches may be performed based on context keywords. Context keywords for a search can be derived by the technology solely from the metadata from an item selected by a user of a mobile communications device **300,** as illustrated in the example shown in FIG. 17. A selected item can be a musical track, a musical album, an artist a ringtone and the like. Once an extended search has been invoked, there is no additional data processing performed within the media content located by an extended search. By way of example only, after extended search is conducted in You Tube^{™} and a browser associated with You Tube^{™} is closed, a device **300** will display the same image that a device **300** displayed before an extended search was conducted.

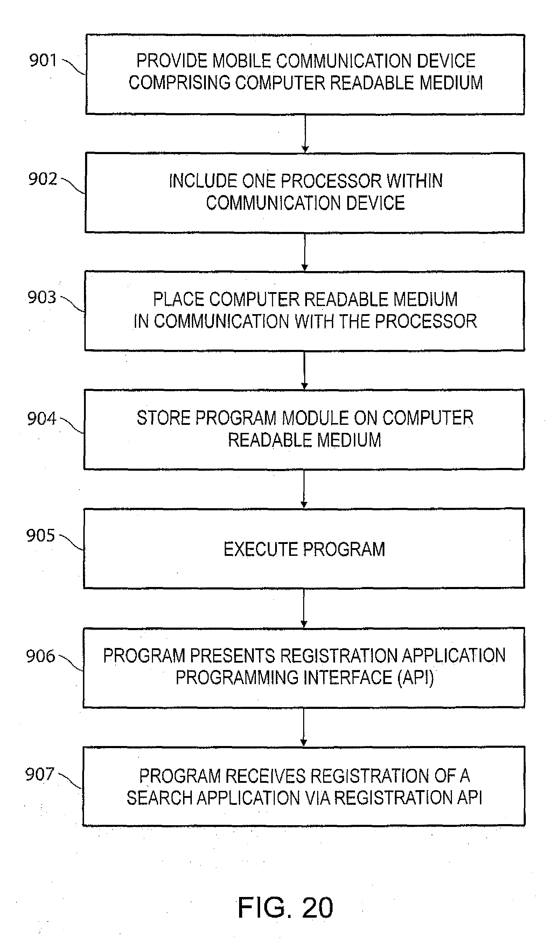

FIG. 20 illustrates a method implemented by the technology. A mobile communications device is comprises a computer readable medium **901** and a processor **902.** A computer readable medium is in communication with the processor **903.** A program module is stored on a computer readable medium **904.** Execution of the program module **905** presents a registration application programming interface **906.** The program module receives registration of a search application via the registration application programming interface **907.**

The technology can take the forms of hardware, software or both hardware and software elements. In some implementations, the technology is implemented in software, which includes, but is not limited to, firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **300.** The medium can be an electronic, magnetic, optical, electromagnetic, infrared, or semiconductor system (or apparatus or device **300)** or a propagation medium (though propagation mediums as signal carriers per se are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

The technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **300.** The medium can be an electronic, magnetic, optical, electromagnetic, infrared, or semiconductor system (or apparatus or device **300)** or a propagation medium (though propagation mediums as signal carriers pense are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray^{™}. Both processors and program code for implementing each as aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A computer program product for a media search, the computer program product comprising:
at least one computer readable medium; and
at least one program module,
wherein the at least one program module is stored on the at least one medium, and
wherein the at least one program module is operable, upon execution by a processor for:
presenting a registration application programming interface (API);
receiving registration of a search application via the registration API,
wherein the registration comprises identifying media formats for which the application maybe used to search;
receiving a query directed to a first media format; and
using the received query, querying each registered search application that has identified the first media format.

2. The computer program product of claim 1, wherein a registered search application is configured to search for media content stored on a mobile communications device.

3. The computer program product of claim 1 or 2, wherein a registered search application is configured to search for media content stored on at least one server.

4. The computer program product of claim 1, 2, or 3, wherein a registered search application searches for media content via a gateway server.

5. The computer program product of claim 1, 2, 3, or 4, wherein the first media format is a video format.

6. The computer program product of claim 1, 2, 3, 4, or 5, wherein the first media format is one of a photo format, a sound format and a text format.

7. A mobile communications device comprising:
at least one processor,
at least one computer readable medium in communication with the processor; and
at least one program module,
stored on the at least one medium, and
operable, upon execution by the processor for:
presenting a registration application programming interface (API);
receiving registration of a search application via the registration API,
wherein the registration comprises identifying media formats for which the application maybe used to search;
receiving a query directed to a first media format; and
using the received query, querying each registered search application that has identified the first media format.

8. The mobile communications device of claim 7, wherein a registered search application is configured to search for media content stored on a mobile communications device.

9. The mobile communications device of claim 7 or 8, wherein a registered search application is configured to search for media content stored on at least one server.

10. The mobile communications device of claim 7, 8, or 9, wherein a registered search application searches for media content via a gateway server.

11. The mobile communications device of claim 7, 8, 9, or 10 wherein the first media format is a video format.

12. The mobile communications device of claim 7, 8, 9, 10, or 11, wherein the first media format is one of a photo format, a sound format and text format.

13. A computer-implemented method for implementation on at least one mobile communication device, the method comprising:
providing at least one mobile communication device comprising at least one computer readable medium;
including at least one processor within the at least one communication device,
placing the at least one computer readable medium in communication with the processor;
storing on the at least one computer readable medium at least one computer program product comprising at least one program module;
through execution of a program module by the at least one processor:
presenting at least one registration application programming interface (API);
receiving registration of a search application via the registration API,
wherein the registration comprises identifying media formats for which the at least one registration API may be used to search;
receiving a query directed to a first media format; and
receiving the received query, querying each registered search application that has identified the first media format.

14. The computer-implemented method of claim 13, further comprising searching for media content stored on one of a mobile communications device and at least one server.

15. The computer-implemented method of claim 13 or 14, further comprising searching for media content via a gateway server.

## Amended claims

### Amended claims in accordance with Rule 137(2) EPC.

**1.** A computer program product for a media search, the computer program product comprising:
at least one computer readable medium (901); and
at least one program module,
wherein the at least one program module is stored on the at least one medium (901), and
wherein the at least one program module is operable, upon execution by a processor (438) for:
presenting (906) a registration application programming interface (API);
receiving (907) registration of a search application via the registration API,
wherein the registration comprises identifying media formats for which the application maybe used to search;
receiving a query directed to a first media format; and
using the received query, querying each registered search application that has identified the first media format.

**2.** The computer program product of claim 1, wherein a registered search application is configured to search for media content stored on a mobile communications device (300).

**3.** The computer program product of claim 1 or 2, wherein a registered search application is configured to search for media content stored on at least one server.

**4.** The computer program product of claim 1, 2, or 3, wherein a registered search application searches for media content via a gateway server.

**5.** The computer program product of claim 1, 2, 3, or 4, wherein the first media format is a video format.

**6.** The computer program product of claim 1, 2, 3, 4, or 5, wherein the first media format is one of a photo format, a sound format and a text format.

**7.** A mobile communications device (300) comprising:
at feast one processor (438),
at least one computer readable medium (901) in communication with the processor (438); and
at least one program module,
stored on the at least one medium (901), and
operable, upon execution by the processor (438) for:
presenting (906) a registration application programming interface (API);
receiving (907) registration of a search application via the registration API,
wherein the registration comprises identifying media formats for which the application maybe used to search;
receiving a query directed to a first media format; and
using the received query, querying each registered search application that has identified the first media format.

**8.** The mobile communications device (300) of claim 7, wherein a registered search application is configured to search for media content stored on a mobile communications device (300).

**9.** The mobile communications device (300) of claim 7 or 8, wherein a registered search application is configured to search for media content stored on at least one server.

**10.** The mobile communications device (300) of claim 7, 8, or 9, wherein a registered search application searches for media content via a gateway server.

**11.** The mobile communications device (300) of claim 7, 8, 9, or 10 wherein the first media format is a video format.

**12.** The mobile communications device (300) of claim 7, 8, 9, 10, or 11, wherein the first media format is one of a photo format, a sound format and text format.

**13.** A computer-implemented method for implementation on at least one mobile communication device (300), the method comprising:
providing at least one mobile communication device (300) comprising at least one computer readable medium (901);
including at least one processor (438) within the at least one communication device (300),
placing the at least one computer readable medium (901) in communication with the processor (438);
storing on the at least one computer readable medium (901) at least one computer program product comprising at least one program module;
through execution of a program module by the at least one processor:
presenting (906) at least one registration application programming interface (API);
receiving registration of a search application via the registration API,
wherein the registration comprises identifying media formats for which the at least one registration API may be used to search;
receiving a query directed to a first media format; and
receiving the received query, querying each registered search application that has identified the first media format.

**14.** The computer-implemented method of claim 13, further comprising searching for media content stored on one of a mobile communications device (300) and at least one server.

**15.** The computer-implemented method of claim 13 or 14, further comprising searching for media content via a gateway server.
